(19) Europäisches Patentamt
European Patent Office
Office européen des brevets

(11) EP 3 190 140 B1

(12) EUROPEAN PATENT SPECIFICATION

(45) Date of publication and mention of the grant of the patent:
**14.02.2018 Bulletin 2018/07**

(21) Application number: **17150823.7**

(22) Date of filing: **10.01.2017**

(51) Int Cl.:
*C08G 75/0204* (2016.01) *C07C 315/00* (2006.01)
*C07C 317/22* (2006.01) *C07C 323/00* (2006.01)
*C08J 5/00* (2006.01) *C08G 75/025* (2016.01)

# (54) METHOD FOR PREPARING A POLYMER

VERFAHREN ZUR HERSTELLUNG VON POLYARYLENSULFID (PAS)-MONOMER

PROCÉDÉ DE PRÉPARATION DE SULFURE DE POLYARYLÈNE (PA) MONOMÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.01.2016 US 201662277091 P**
**21.12.2016 TW 105142423**

(43) Date of publication of application:
**12.07.2017 Bulletin 2017/28**

(73) Proprietor: **Industrial Technology Research Institute**
**Chutung, Hsinchu 31040 (TW)**

(72) Inventors:
- **Ho, Po-Hsien**
  **112 Taipei City (TW)**
- **Lin, Chih-Hsiang**
  **105 Taipei City (TW)**
- **Chen, Meng-Hsin**
  **925 Pingtung County (TW)**
- **Fan, Cheng-Hsing**
  **709 Tainan City (TW)**
- **Kao, Hsin-Ching**
  **308 Hsinchu County (TW)**
- **Chang, Yih-Her**
  **308 Hsin Chu County (TW)**

(74) Representative: **Michalski Hüttermann & Partner Patentanwälte mbB**
**Speditionstraße 21**
**40221 Düsseldorf (DE)**

(56) References cited:
**WO-A1-2015/033936 WO-A1-2015/033938**

- **TSUCHIDA E ET AL: "SYNTHESIS OF POLY(PHENYLENE SULFIDE) BY O2 OXIDATIVE POLYMERIZATION OF METHYL PHENYL SULFIDE", MACROMOLECULES, AMERICAN CHEMICAL SOCIETY, US, vol. 27, no. 4, 14 February 1994 (1994-02-14), pages 1057-1060, XP000427148, ISSN: 0024-9297, DOI: 10.1021/MA00082A027**
- **KIMIHISA YAMAMOTO ET AL: "Aryl sulfide bond formation using the sulfoxide-acid system for synthesis of poly(p-phenylene sulfide) via poly(sulfonium cation) as a precursor", JOURNAL OF THE AMERICAN CHEMICAL SOCIETY, vol. 115, no. 13, 1 June 1993 (1993-06-01) , pages 5819-5820, XP055355371, ISSN: 0002-7863, DOI: 10.1021/ja00066a058**
- **EISHUN TSUCHIDA ET AL: "SYNTHESIS OF HIGH MOLECULAR WEIGHT POLY(PHENYLENE SULFIDE) BY OXIDATIVE POLYMERIZATION VIA POLY(SULFONIUM CATION) FROM METHYL PHENYL SULFOXIDE", MACROMOLECULES, AMERICAN CHEMICAL SOCIETY, US, vol. 26, no. 26, 20 December 1993 (1993-12-20), pages 7144-7148, XP000416281, ISSN: 0024-9297, DOI: 10.1021/MA00078A005**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### TECHNICAL FIELD

The disclosure relates to a method for preparing a polymer, and in particular to a method for preparing a sulfonium salt polymer or polyarylene sulfide (PAS).

### BACKGROUND

Polyarylene sulfide (PAS) is a material with good physical characteristics such as thermal resistance, chemical resistance, flame resistance, and electrical insulation characteristics. Thus, polyarylene sulfide (PAS) can be used in computer accessories and auto accessories; as industrial fibers having chemical resistance; and as a coating for parts that come into contact with corrosive chemicals.

One conventional method for producing polyarylene sulfide (PAS) is the halogen-containing process that, in principle, results in a low yield of polyarylene sulfide (PAS) and produces unrecyclable halogen-containing byproducts that can cause environmental pollution. Since the purification of polyarylene sulfide (PAS) using a conventional method is very difficult, the halogen-containing byproducts reside in the polyarylene sulfide (PAS).

Therefore, a novel method for preparing polyarylene sulfide (PAS) is needed.

### SUMMARY

According to embodiments of the disclosure, the disclosure provides a method for preparing a polymer. The method includes subjecting at least one monomer having a structure represented by Formula (I) to a reaction in the presence of sulfonic acid, diphenyl amine, and oxygen-containing phosphide, obtaining a sulfonium salt polymer

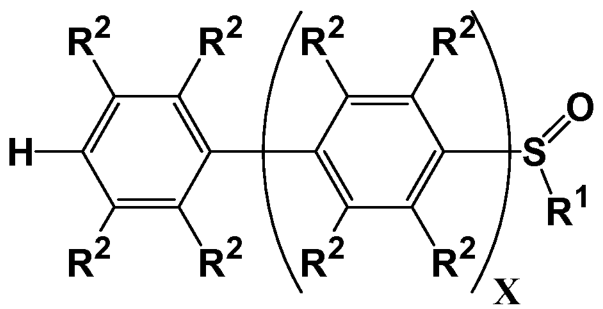

Formula (I)

, wherein x is 0, 1, or 2; $R^1$ is $C_{1-6}$ alkyl; and $R^2$ is independently hydrogen, or $C_{1-6}$ alkyl.

A detailed description is given in the following embodiments with reference to the accompanying drawings.

### DETAILED DESCRIPTION

The conversion rate of the polyarylene sulfide (PAS) is not high when the polyarylene sulfide (PAS) is prepared by polymerizing the monomer (I) under acidic conditions to form the cationic polymer and then subjecting the cationic polymer to a demethylation, referring to Reaction Formula (I).

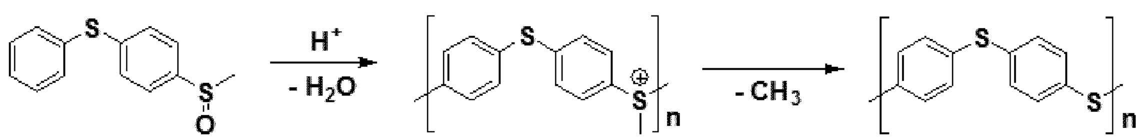


monomer (I) cationic polymer polyarylene sulfide

Reaction Formula (I)

In addition, the monomer (I) may be prepared according to Reaction Formula (II), i.e. a methyl phenyl sulfoxide is reacted with methyl phenyl sulfide under acidic conditions to obtain a cationic intermediate and the cationic intermediate is subjected to a demethylation and oxidation. The yield of the monomer (I), however, is reduced due to the complexity

of the preparation as shown in Reaction Formula (II).

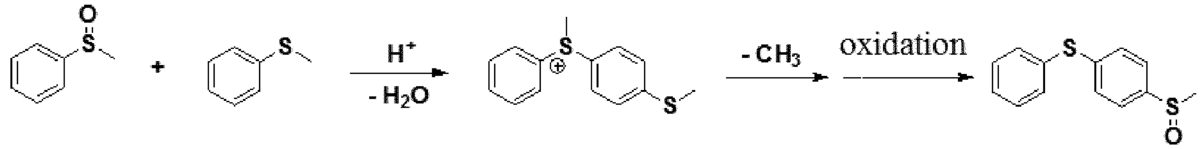


monomer (I)

Reaction Formula (II)

Accordingly, the embodiments of the disclosure provide a method for preparing a polymer in order to increase the availability of the monomer and improve the conversion rate of the monomer to sulfonium salt polymer. According to embodiments of the disclosure, the method includes subjecting at least one monomer having a structure represented by Formula (I) to a polymerization in the presence of sulfonic acid, diphenyl amine, and oxygen-containing phosphide, obtaining a sulfonium salt polymer.

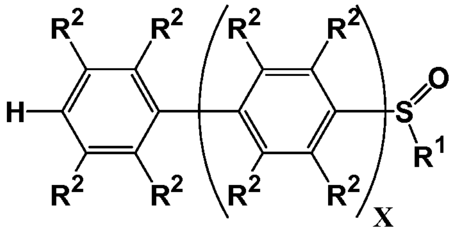

Formula (I)

, wherein x can be 0, 1, or 2; $R^1$ can be $C_{1-6}$ alkyl; and $R^2$ can be independently hydrogen, or $C_{1-6}$ alkyl. According to embodiments of the disclosure, the sulfoxide functional group (S=O) of the monomer having a structure represented by Formula (I) can be protonated under acidic conditions to form a reactive sulfonium hydroxide. Furthermore, the diphenylamine, serving as charge control agent, can provide an electron to complex with to the sulfonium hydroxide to form a complex structure, thereby enhancing the reactivity of the $\pi$-electrons of the aromatic ring for polymerization. The conversion rate of the monomer having a structure represented by Formula (I) to the sulfonium salt polymer (or polyarylene sulfide) can be significantly increased when the polymerization is performed in the presence of the oxygen-containing phosphide. In addition, after obtaining the sulfonium salt polymer, a nucleophile can be reacted with the sulfonium salt polymer, obtaining a thermal resistant polyarylene sulfide (having a melting temperature (Tm) larger than or equal to 280°C) without being mixed with halogen-containing byproduct. According to embodiments of the disclosure, the conversion rate of the monomer having a structure represented by Formula (I) to the sulfonium salt polymer (or polyarylene sulfide) was determined by the following equation:

$$\text{conversion rate} = \frac{\text{weight of monomer}}{\begin{array}{c}\text{weight of sulfonium salt polymer}\\ \text{(or polyarylene sulfide)}\end{array}} \times 100\%$$

According to embodiments of the disclosure, the alkyl group of the disclosure can be a linear or branched alkyl group. Therefore, $R^1$ can be methyl, ethyl, propyl, isopropyl, n-butyl, t-butyl, sec-butyl, isobutyl, pentyl, or hexyl. In addition, each $R^2$ can be independently hydrogen, fluorine, methyl, ethyl, propyl, isopropyl, n-butyl, t-butyl, sec-butyl, isobutyl, pentyl, or hexyl.

According to embodiments of the disclosure, the sulfonic acid can be a compound having a structure represented by Formula (II)

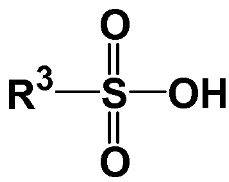

Formula (II)

, wherein $R^3$ can be hydrogen, $C_{1-6}$ alkyl group, or $C_{1-6}$ fluoroalkyl group. Herein, the haloalkyl group means that hydrogen atoms bonded on carbon atoms of linear or branched alkyl group can be partially or totally replaced with fluorine. For Example, fluoromethyl can be $-CH_2F$, $-CHF_2-$ or $-CF_3$. According to embodiments of the disclosure, $R^3$ can be methyl, ethyl, propyl, isopropyl, n-butyl, t-butyl, sec-butyl, isobutyl, pentyl, hexyl, fluoromethyl, fluoroethyl, or fluoropropyl. According to some embodiments of the disclosure, the sulfonic acid can be methanesulfonic acid, ethanesulfonic acid, propylsulfonic acid, trifluoromethanesulfonic acid ($CF_3SO_3H$), or a combination thereof. According to embodiments of the disclosure, the molar ratio of the sulfonic acid to the monomer can be from about 1 to 200, such as from about 1 to 100. Herein, the sulfonic acid can provide acidic conditions in order to promote the polymerization of the monomer, and the excessive sulfonic acid can also serve as the reaction solvent.

According to embodiments of the disclosure, due to the oxygen-containing phosphide used in the method for preparing a polymer of the disclosure, the conversion rate of the monomer having a structure represented by Formula (I) to the sulfonium salt polymer can be significantly increased. The oxygen-containing phosphide can be a compound consisting of oxygen and phosphorus, such as phosphoric anhydride ($P_2O_5$). In addition, the oxygen-containing phosphide can be a compound consisting of oxygen, hydrogen and phosphorus, such as polyphosphoric acid ($H_{(n+2)}PnO_{(3n+1)}$, wherein n is larger than 1). According to embodiments of the disclosure, the molar ratio of the oxygen-containing phosphide to the monomer can be from about 0.5 to 2, such as from about 0.5 to 1.5.

According to embodiments of the disclosure, the molar ratio of the diphenylamine to the monomer can be from about 0.5 to 2, such as from about 0.5 to 1.5. The diphenylamine and oxygen-containing phosphide can enhance the polymerization of the monomer having a structure represented by Formula (I), and the diphenylamine and oxygen-containing phosphide are not reactants of the polymerization.

According to embodiments of the disclosure, the method for preparing a polymer of the disclosure can include subjecting one monomer having a structure represented by Formula (I) to a polymerization in the presence of sulfonic acid, diphenylamine, and oxygen-containing phosphide, wherein the monomer having a structure represented by Formula (I) can be

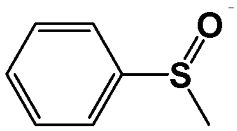
,

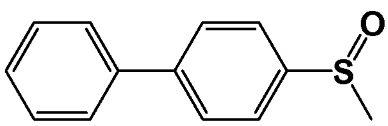
, or
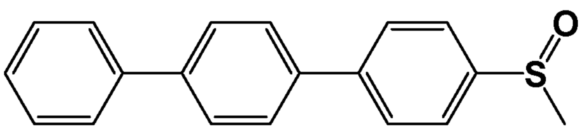
.

In addition, according to embodiments of the disclosure, the method for preparing a polymer of the disclosure can include subjecting two different monomers having a structure represented by Formula (I) to a polymerization in the presence of sulfonic acid, diphenylamine, and oxygen-containing phosphide, wherein one of the two different monomers can be

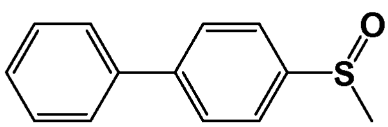
.

Moreover, according to embodiments of the disclosure, the method for preparing a polymer of the disclosure can include subjecting two different monomers having a structure represented by Formula (I) to a polymerization in the presence of sulfonic acid, diphenylamine, and oxygen-containing phosphide, wherein the two different monomers having a structure

represented by Formula (I) can be

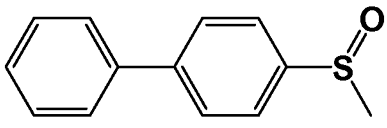 and 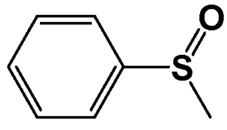 .

According to embodiments of the disclosure, the sulfonium salt polymer prepared by the aforementioned method for preparing a polymer of the disclosure can include at least one repeating unit having a structure represented by Formula (III),

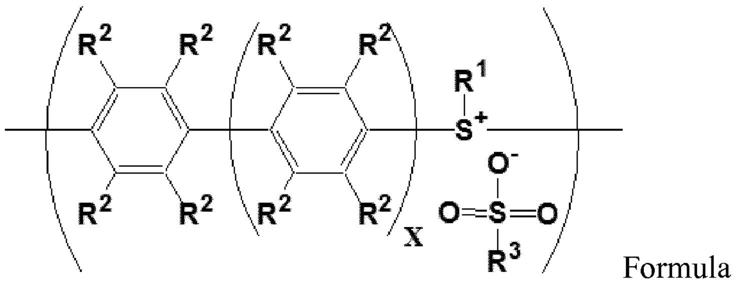

Formula (III)

, wherein x can be 0, 1, or 2; $R^1$ can be $C_{1-6}$ alkyl group; each $R^2$ can be independently hydrogen, or $C_{1-6}$ alkyl group; and, $R^3$ can be hydrogen, $C_{1-6}$ alkyl group, or $C_{1-6}$ haloalkyl group. According to some embodiments of the disclosure, the repeating unit having a structure represented by Formula (III) can be

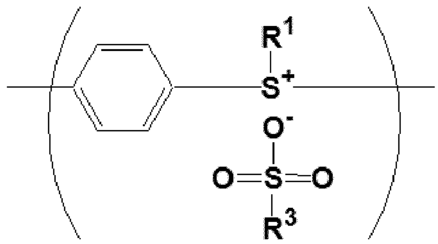

,

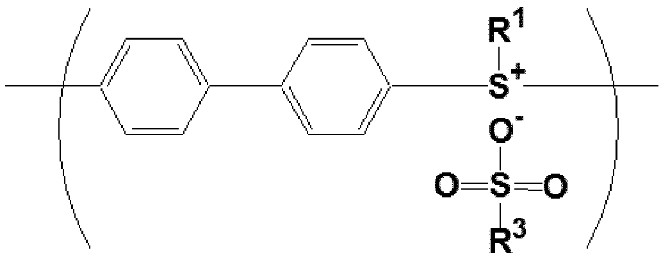

,

or

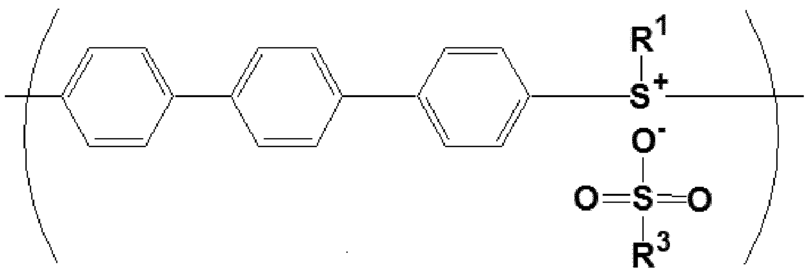

.

According to embodiments of the disclosure, after obtaining the sulfonium salt polymer, the method for preparing a polymer can further include reacting a nucleophile with the sulfonium salt polymer, obtaining a polyarylene sulfide. In particular, the nucleophile can be substituted or unsubstituted pyridine or derivatives thereof (such as pyridine or 4-methylpyridine), amine (such as triethylamine), halogenated salt (such as potassium chloride), alcohol (such as methanol or ethanol), or amide (such as dimethylformamide, dimethylacetamide, or N-methylpyrrolidone). The molar ratio of the nucleophile to the monomer having a structure represented by Formula (I) (for forming the sulfonium salt polymer) can be from about 1 to 100, and the excessive nucleophile can also serve as the reaction solvent. The polyarylene sulfide (PAS) can have at least one repeating unit having a structure represented by Formula (IV)

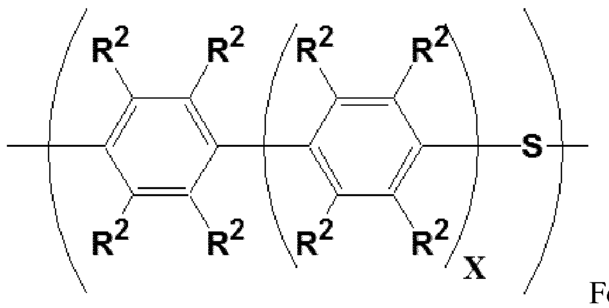

Formula (IV)

, wherein x can be 0, 1, or 2; and, each $R^2$ can be independently hydrogen, or $C_{1-6}$ alkyl group. The repeating unit having a structure represented by Formula (IV) can be

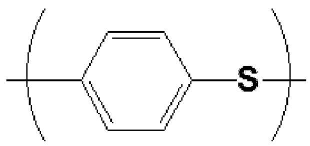

,

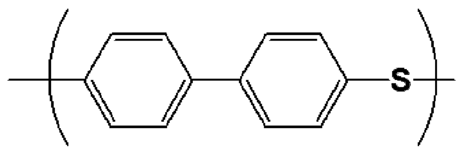

,

or

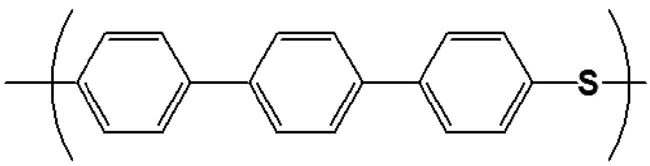

.

The inventive concept of the disclosure may be embodied in various forms without being limited to the exemplary embodiments set forth herein.

Example 1:

0.5g of methyl phenyl sulfoxide, 0.25g of phosphorus pentoxide ($P_2O_5$), and 0.3g of diphenyl amine were added into a reaction bottle. Next, 3ml of trifluoromethanesulfonic acid was added slowly into the reaction bottle at 0□ (ice bath). After stirring for 1hr, the reaction bottle was raised back to room temperature. After stirring for 20hr, the result was poured into 100ml of ethyl ether. After stirring, the result was washed with a small amount of acetone. After drying, Sulfonium salt polymer (I) (white solid) was obtained.

Next, Sulfonium salt polymer (I) was dissolved in 15ml of 4-methylpyridine, and the obtained solution was heated to reflux (about 100°C). After stirring for 6hr, the result was poured into 30ml of hydrochloric acid aqueous solution (with a concentration of 10%), and then washed with a small amount of acetone, obtaining Polyarylene sulfide (PAS) (I) (white solid) with a conversion rate about 88%. The synthesis pathway of the above reaction was as follows:

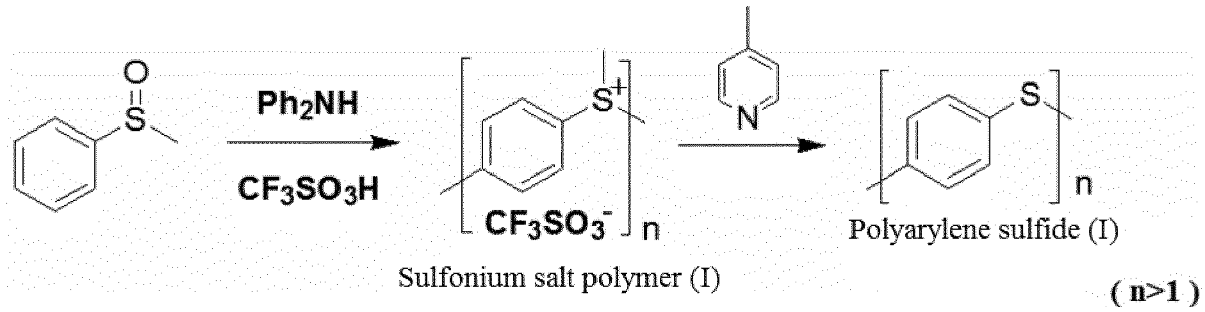

Sulfonium salt polymer (I)

Polyarylene sulfide (I)

( n>1 )

Next, the properties of Polyarylene sulfide (PAS) (I) were measured by a differential scanning calorimetry (DSC), and the result shows that Polyarylene sulfide (PAS) (I) has a melting temperature (Tm) of about 281 °C and a recrystallization temperature (Tc) of about 210°C . Next, Polyarylene sulfide (PAS) (I) was analyzed by Fourier-transform infrared (FT-IR) spectroscopy, and the result shows that the strong absorption peaks ($cm^{-1}$) are 3065, 1573, 1471, 1387, 1092, 1009, 998, 815, 742.

Example 2:

3g of phenylboronic acid, 3.45g of 4-bromothioanisole, 0.1g of $Pd(PPh_3)_4$, and 1.5g of sodium carbonate ($Na_2CO_3$) were added into a reaction bottle. Next, 50ml of toluene, 60ml of deionized water, and 10ml of methanol were added slowly into the reaction bottle. After stirring for 24hr at 100°C, ethyl acetate was utilized to extract the solution with water several times, and then the organic phase was collected. After drying, Compound (I) (1-methylsulfanyl-4-phenylbenzene) with a yield of about 99% was obtained. The synthesis pathway of the above reaction was as follows:

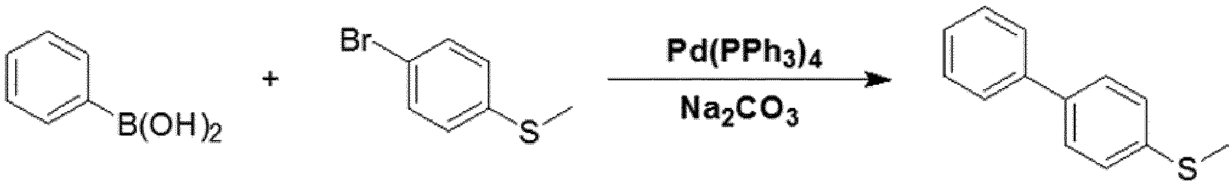

Compound (I)

Compound (I) was analyzed by nuclear magnetic resonance (NMR) spectroscopy and the result is as follows: $^1H$ NMR (500MHz, ppm, $CDCl_3$): 2.55 (-CH3, s), 7.33-7.37 (phenyl, 3H, m), 7.43-7.45 (phenyl, 2H, m), 7.54-7.6 (phenyl, 4H, m).

Next, 1g of compound (I) was added into a reaction bottle, and then 10ml of acetic acid and 2ml of hydrogen peroxide (with a concentration of 30%) were added slowly into the reaction bottle. After stirring at room temperature for 20 min, the result was filtered, obtaining an orange solid. The orange solid was extracted three times using dichloromethane and water as the extraction solvent, and then the organic phase was collected. After drying, filtering and concentrating the organic phase, Compound (II) was obtained. The synthesis pathway of the above reaction was as follows:

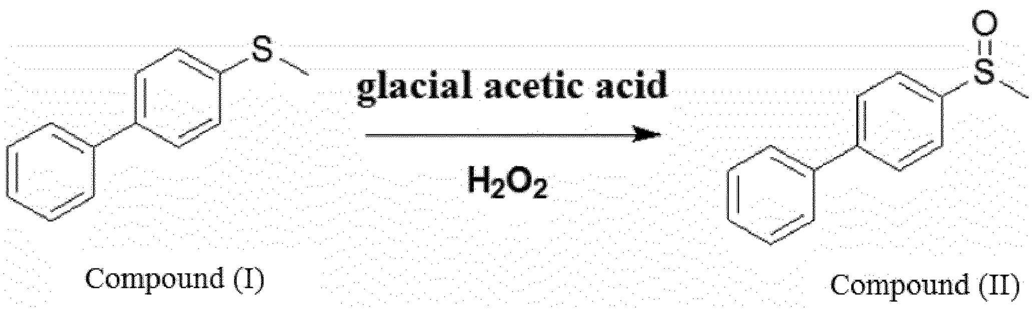

Compound (I)

Compound (II)

Compound (II) was analyzed by nuclear magnetic resonance (NMR) spectroscopy and the result is as follows: $^1H$ NMR (500MHz, ppm, $CDCl_3$): 2.80 ($-CH_3$, s), 7.42-7.51 (biphenyl, 3H, m), 7.62-7.63 (biphenyl, 2H, m), 7.73-7.78 (biphenyl, 4H, m).

Next, 0.5g of compound (II), 0.39g of diphenyl amine, and 0.16g of phosphorus pentoxide ($P_2O_5$) were added

into a reaction bottle. Next, 5ml of trifluoromethanesulfonic acid was added into the reaction bottle at 0°C (ice bath). After stirring at 0°C (ice bath) for 1hr, the reaction bottle was raised slowly back to room temperature. After stirring for 20hr, the result was poured into 100ml of ethyl ether, and then washed with a small amount of acetone. After drying, Sulfonium salt polymer (II) was obtained. Next, Sulfonium salt polymer (II) was dissolved in 6ml of 4-methylpyridine, and then stirred at room temperature for 1hr. Next, the result was heated to reflux (about 120°C). After stirring for 20hr, the result was poured into 30ml of hydrochloric acid aqueous solution (with a concentration of 10%), and then washed with a small amount of acetone, obtaining Polyarylene sulfide (PAS) (II) (white solid) with a conversion rate of about 90%, as shown in Table 1. The synthesis pathway of the above reaction was as follows:

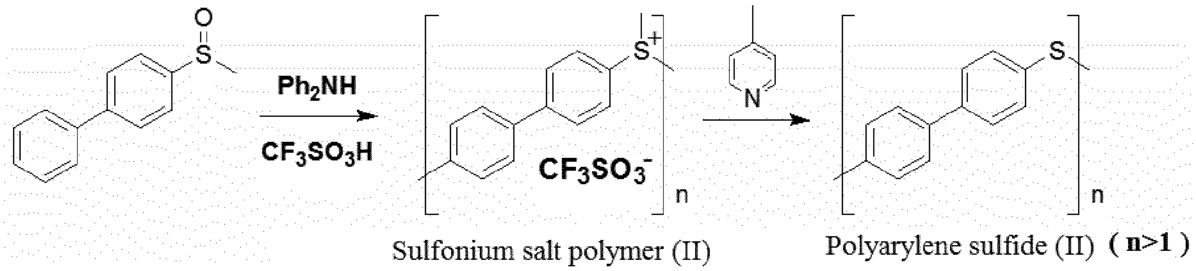


Sulfonium salt polymer (II) Polyarylene sulfide (II) (n>1)

Next, the properties of Polyarylene sulfide (PAS) (II) were measured by a differential scanning calorimetry (DSC), and the result shows that Polyarylene sulfide (PAS) (II) has a melting temperature (Tm) of about 404 °C and a recrystallization temperature (Tc) of about 369°C . Next, Polyarylene sulfide (PAS) (II) was analyzed by Fourier-transform infrared (FT-IR) spectroscopy, and the result shows that the strong absorption peaks ($cm^{-1}$) are 3026, 1590, 1474, 1391, 1313, 1152, 1137, 1090, 1045, 998, 952, 811, 758, 690.

Comparative Example 1:

0.5g of compound (II) and 0.39g of diphenylamine were added into a reaction bottle. Next, 5ml of trifluoromethanesulfonic acid was added into the reaction bottle and cooled to 0□ (ice bath). After stirring at 0□ (ice bath) for 1hr, the reaction bottle was raised slowly back to room temperature. Next, after stirring for 20hr, the result was poured into 100ml of ethyl ether, and washed with a small amount of acetone. After drying, Sulfonium salt polymer (II) was obtained. Next, Sulfonium salt polymer (II) was dissolved in 6ml of 4-methylpyridine and stirred at room temperature for 1hr. Next, the result was heated to reflux (about 120°C). After stirring for 20hr, the result was poured into 30ml of hydrochloric acid aqueous solution (with a concentration of 10%), and washed with a small amount of acetone, obtaining Polyarylene sulfide (PAS) (II) (white solid) with a conversion rate of about 57%, as shown in Table 1.

Table 1

| | compound (II) | trifluoromethanesulfonic acid | diphenylamine | phosphorus pentoxide | conversion rate |
|---|---|---|---|---|---|
| Example 2 | 0.5g | 5ml | 0.39g | 0.33g | 90% |
| Comparative Example 1 | 0.5g | 5ml | 0.39g | - | 57% |

In comparison with Comparative Example 1, besides trifluoromethanesulfonic acid and diphenylamine, Example 2 further employed phosphorus pentoxide during the polymerization of Compound (II). As shown in Table 1, in comparison with Comparative Example 1, Polyarylene sulfide (PAS) (II) prepared by Example 2 exhibits a relatively high conversion rate.

Example 3:

0.19g of methyl phenyl sulfoxide, 0.3g of compound (II), 0.2g of phosphorus pentoxide, and 0.23g of diphenylamine were added into a reaction bottle. Next, 3ml of trifluoromethanesulfonic acid was added at 0°C (ice bath). After stirring at 0□ (ice bath) for 1hr, the reaction bottle was raised slowly back to room temperature. After stirring for 20hr, the result was poured into 100ml of ethyl ether, and then washed with a small amount of acetone. After drying, Sulfonium salt polymer (III) was obtained. Next, Sulfonium salt polymer (III) was dissolved in 15ml of 4-methylpyridine, and then stirred at room temperature for 1hr. Next, the result was heated to reflux (about 100°C). After stirring for 6hr, the result

was poured into 30ml of hydrochloric acid aqueous solution (with a concentration of 10%), and then washed with a small amount of acetone, obtaining Polyarylene sulfide (PAS) (III) (white solid) with a conversion rate of about 35%, as shown in Table 2. The synthesis pathway of the above reaction was as follows:

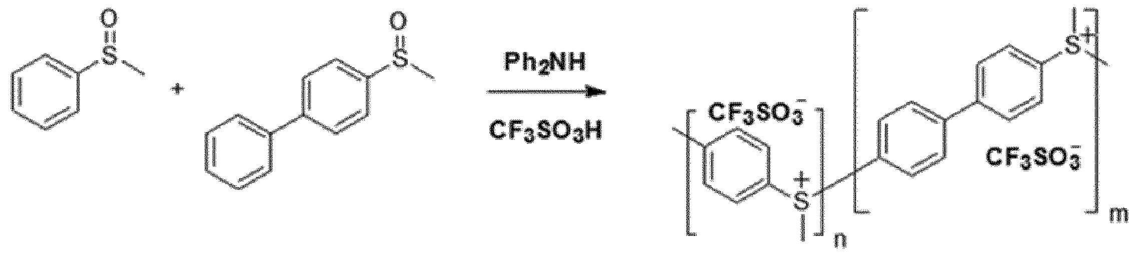


Sulfonium salt polymer (III)

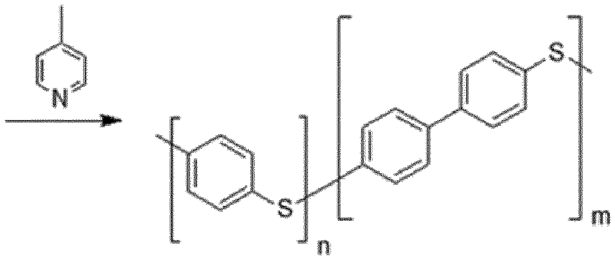

($n>1, m>1$)

Polyarylene sulfide (III)

(the repeating units of the Sulfonium salt polymer (III) or Polyarylene sulfide (PAS) (III) are arranged in a random fashion).

Next, the properties of Polyarylene sulfide (PAS) (III) were measured by a differential scanning calorimetry (DSC), and the result shows that Polyarylene sulfide (PAS) (III) has a glass transition temperature (Tg) of about 113°C. Next, Polyarylene sulfide (PAS) (III) was analyzed by Fourier-transform infrared (FT-IR) spectroscopy, and the result shows that the strong absorption peaks are 3024, 1584, 1474, 1389, 1319,1178, 1155, 1090, 1001, 810, 759, 694.

Comparative example 2:

Comparative example 2 was performed in the same manner as in Example 3 except that phosphorus pentoxide was absent during the polymerization, obtaining polyarylene sulfide (PAS) (III) with a conversion rate about ≤5%, as shown in Table 2.

Table 2

| | compound (II) | trifluoromethanesulfonic acid | diphenylamine | phosphorus pentoxide | conversion rate |
|---|---|---|---|---|---|
| Example 3 | 0.3g | 3ml | 0.23g | 0.2g | 35% |
| Comparative Example 2 | 0.3g | 3ml | 0.23g | - | ≤5% |

In comparison with Comparative Example 2, besides trifluoromethanesulfonic acid and diphenylamine, Example 3 further employed phosphorus pentoxide during the polymerization of Compound (II) and methyl phenyl sulfoxide. As shown in Table 2, in comparison with Comparative Example 2, Polyarylene sulfide (PAS) (III) prepared by Example 3 exhibits a relatively high conversion rate.

It will be clear that various modifications and variations can be made to the disclosed methods and materials. It is intended that the specification and examples be considered as exemplary only, with the true scope of the disclosure being indicated by the following claims and their equivalents.

## Claims

**1.** A method for preparing a polymer, comprising:

subjecting at least one monomer having a structure represented by Formula (I) to a reaction in the presence of sulfonic acid, diphenyl amine, and oxygen-containing phosphide, obtaining a sulfonium salt polymer

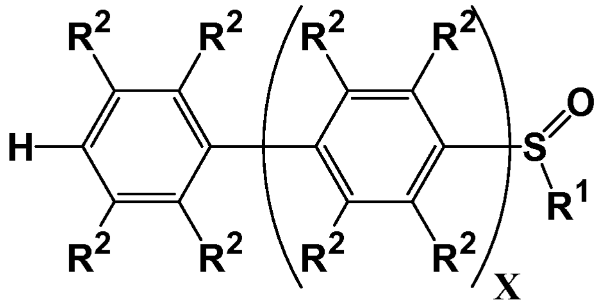

Formula (I)

, wherein x is 0, 1, or 2; $R^1$ is $C_{1-6}$ alkyl group; and $R^2$ is independently hydrogen, or $C_{1-6}$ alkyl group.

**2.** The method as claimed in Claim 1, wherein $R^1$ is methyl, ethyl, propyl, isopropyl, n-butyl, t-butyl, sec-butyl, isobutyl, pentyl, or hexyl.

**3.** The method as claimed in Claim 1, wherein $R^2$ is hydrogen, methyl, ethyl, propyl, isopropyl, n-butyl, t-butyl, sec-butyl, isobutyl, pentyl, or hexyl.

**4.** The method as claimed in Claim 1, wherein the sulfonic acid is a compound having a structure represented by Formula (II)

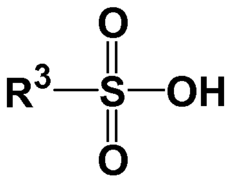

Formula (II)

, wherein $R^3$ is hydrogen, $C_{1-6}$ alkyl group, or $C_{1-6}$ fluoroalkyl group.

**5.** The method as claimed in Claim 1, wherein the sulfonic acid is methanesulfonic acid, ethanesulfonic acid, propylsulfonic acid, trifluoromethanesulfonic acid, or a combination thereof.

**6.** The method as claimed in Claim 1, wherein the oxygen-containing phosphide is phosphoric anhydride, polyphosphoric acid, or a combination thereof.

**7.** The method as claimed in Claim 1, wherein the monomer having a structure represented by Formula (I) is

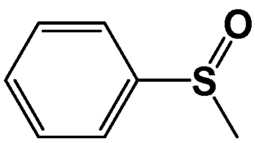

,

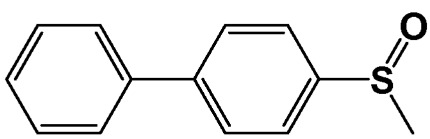

,

or

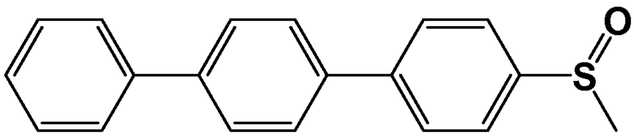
.

8. The method as claimed in Claim 1, wherein the at least one monomer having a structure represented by Formula (I) is

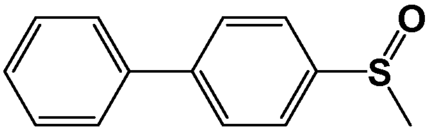

and

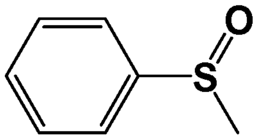
.

9. The method as claimed in Claim 4, wherein the sulfonium salt polymer has at least one repeating unit having a structure represented by Formula (III)

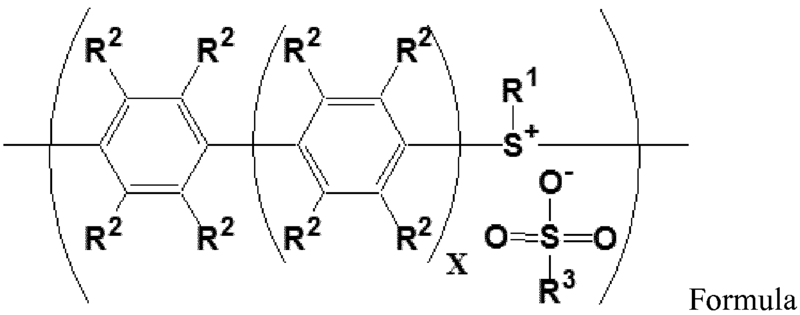

Formula (III)

, wherein x is 0, 1, or 2; $R^1$ is $C_{1-6}$ alkyl group; $R^2$ is independently hydrogen, or $C_{1-6}$ alkyl group; and, $R^3$ is hydrogen, $C_{1-6}$ alkyl group, or $C_{1-6}$ fluoroalkyl group.

10. The method as claimed in Claim 9, wherein the repeating unit having a structure represented by Formula (III) is

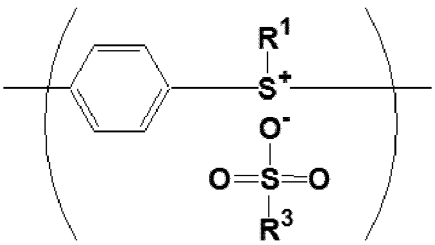
,

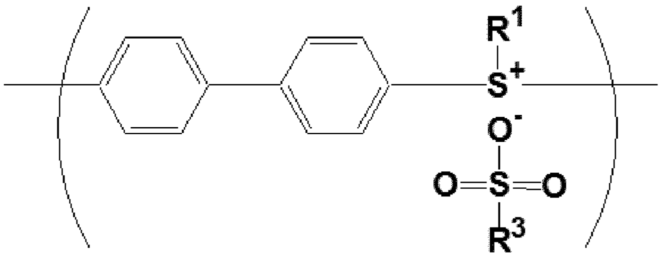

,

or

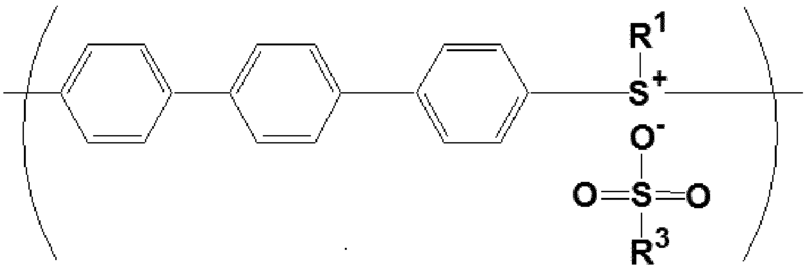

.

**11.** The method as claimed in Claim 1, further comprising:

reacting a nucleophile with the sulfonium salt polymer, obtaining a polyarylene sulfide.

**12.** The method as claimed in Claim 11, wherein the nucleophile is pyridine, 4-methylpyridine, triethylamine, potassium chloride, methanol, ethanol, dimethylformamide, dimethylacetamide, N-methylpyrrolidone, or a combination thereof.

**13.** The method as claimed in Claim 11, wherein the polyarylene sulfide (PAS) has at least one repeating unit having a structure represented by Formula (IV)

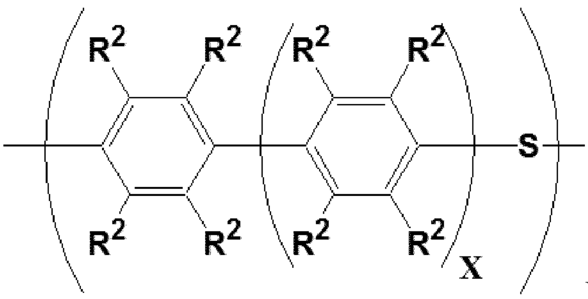

Formula (IV)

, wherein x is 0, 1, or 2; and, $R^2$ is independently hydrogen, or $C_{1-6}$ alkyl group.

**14.** The method as claimed in Claim 13, wherein the repeating unit having a structure represented by Formula (IV) is 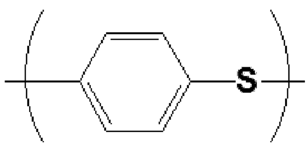 ,

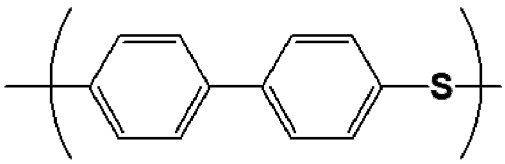

,

or

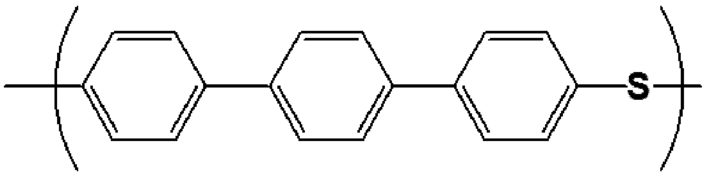

.

**Patentansprüche**

1. Verfahren zum Herstellen eines Polymers, mit den Schritten:

   Veranlassen einer Reaktion mindestens eines Monomers mit einer durch Formel (I) dargestellten Struktur in Gegenwart von Sulfonsäure, Diphenylamin und sauerstoffhaltigem Phosphid, um ein Sulfoniumsalzpolymer zu erhalten

   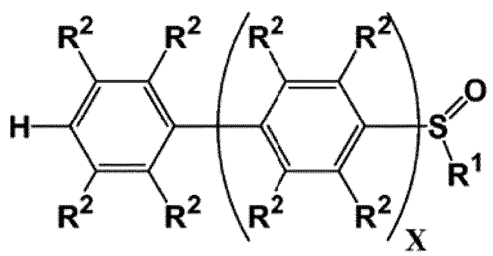

   Formel (I),

   wobei x = 0, 1 oder 2 ist; $R^1$ eine $C_{1-6}$-Alkylgruppe ist; und $R^2$ unabhängig Wasserstoff oder eine $C_{1-6}$-Alkylgruppe ist.

2. Verfahren nach Anspruch 1, wobei $R^1$ Methyl, Ethyl, Propyl, Isopropyl, n-Butyl, t-Butyl, sec-Butyl, Isobutyl, Pentyl oder Hexyl ist.

3. Verfahren nach Anspruch 1, wobei $R^2$ Wasserstoff, Methyl, Ethyl, Propyl, Isopropyl, n-Butyl, t-Butyl, sec-Butyl, Isobutyl, Pentyl oder Hexyl ist.

4. Verfahren nach Anspruch 1, wobei die Sulfonsäure eine Verbindung mit einer durch Formel (II) dargestellten Struktur ist

   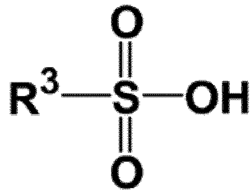

   Formel (II),

   wobei $R^3$ Wasserstoff, eine $C_{1-6}$-Alkylgruppe oder eine $C_{1-6}$-Fluoralkylgruppe ist.

**5.** Verfahren nach Anspruch 1, wobei die Sulfonsäure Methansulfonsäure, Ethansulfonsäure, Propylsulfonsäure, Trifluormethansulfonsäure oder eine Kombination davon ist.

**6.** Verfahren nach Anspruch 1, wobei das sauerstoffhaltige Phosphid Phosphorsäureanhydrid, Polyphosphorsäure oder eine Kombination davon ist.

**7.** Verfahren nach Anspruch 1, wobei das Monomer, das eine durch Formel (I) dargestellte Struktur aufweist,

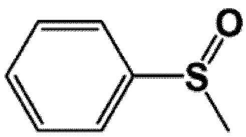 , 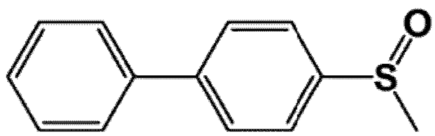

oder

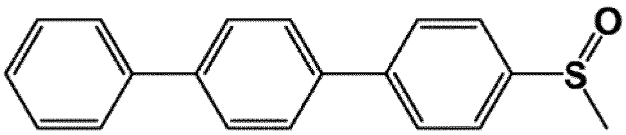

ist.

**8.** Verfahren nach Anspruch 1, wobei das mindestens eine Monomer, das durch Formel (I) dargestellte Struktur hat, eine

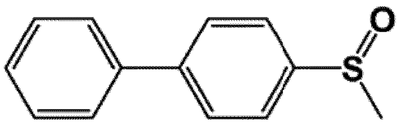 und 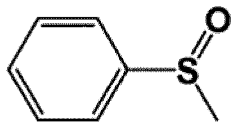

ist.

**9.** Verfahren nach Anspruch 4, wobei das Sulfoniumsalzpolymer mindestens eine Wiederholungseinheit mit einer durch Formel (III) dargestellten Struktur aufweist

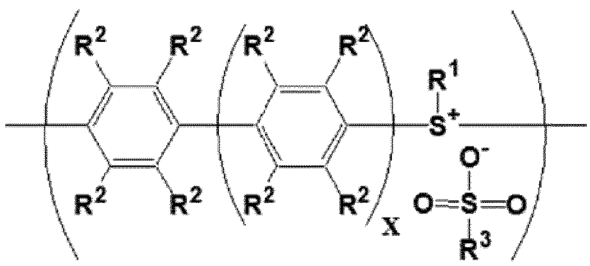 Formel (III),

wobei x = 0, 1 oder 2 ist; $R^1$ eine $C_{1-6}$-Alkylgruppe ist; $R^2$ unabhängig Wasserstoff oder eine $C_{1-6}$-Alkylgruppe ist; und $R^3$ Wasserstoff, eine $C_{1-6}$-Alkylgruppe oder eine $C_{1-6}$-Fluoralkylgruppe ist.

**10.** Verfahren nach Anspruch 9, wobei die Wiederholungseinheit, die eine durch Formel (III) dargestellte Struktur hat,

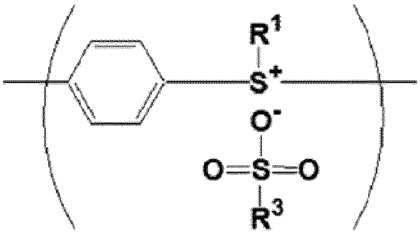,
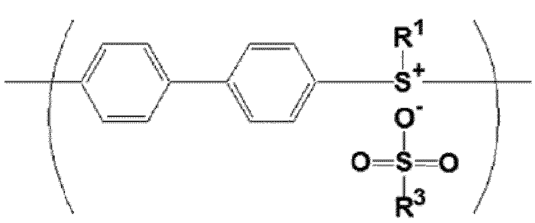

oder

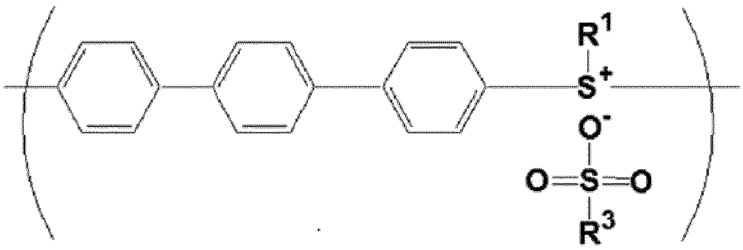

ist.

**11.** Verfahren nach Anspruch 1, ferner mit dem Umsetzen eines Nucleophils mit dem Sulfoniumsalzpolymer, um ein Polyarylensulfid zu erhalten.

**12.** Verfahren nach Anspruch 11, wobei das Nucleophil Pyridin, 4-Methylpyridin, Triethylamin, Kaliumchlorid, Methanol, Ethanol, Dimethylformamid, Dimethylacetamid, N-Methylpyrrolidon oder eine Kombination davon ist.

**13.** Verfahren nach Anspruch 11, wobei das Polyarylensulfid (PAS) mindestens eine Wiederholungseinheit mit einer durch Formel (IV) dargestellten Struktur aufweist

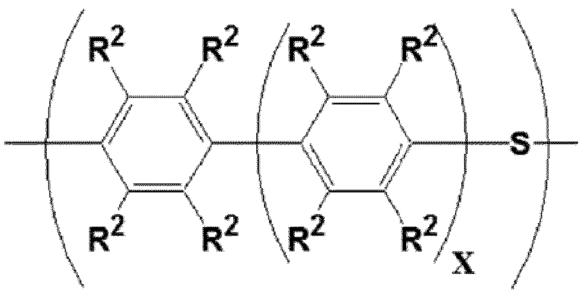

Formel (IV),

wobei x = 0, 1 oder 2 ist; und $R^2$ unabhängig Wasserstoff oder eine $C_{1-6}$-Alkylgruppe ist.

**14.** Verfahren nach Anspruch 13, wobei die Wiederholungseinheit, die eine durch Formel (IV) dargestellte Struktur hat,

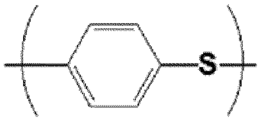,
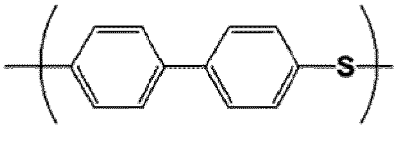

oder

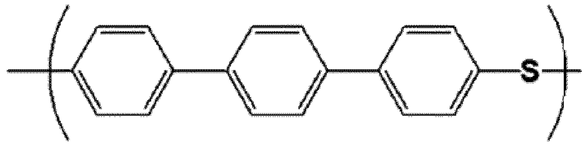

ist.

## Revendications

**1.** Procédé de préparation d'un polymère comprenant :

la soumission d'au moins un monomère ayant une structure représentée par la formule (I) à une réaction en présence d'acide sulfonique, de diphénylamine, et d'un phosphure contenant de l'oxygène, pour obtenir un polymère sel de sulfonium

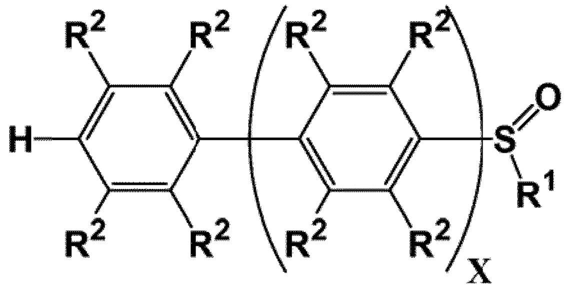

Formule (I)

où x est égal à 0, 1 ou 2 ; $R^1$ est un groupe alkyle en $C_{1-6}$ ; et $R^2$ est indépendamment de l'hydrogène ou un groupe alkyle en $C_{1-6}$.

**2.** Procédé selon la revendication 1, dans lequel $R^1$ est un groupe méthyle, éthyle, propyle, isopropyle, n-butyle, t-butyle, butyle secondaire, isobutyle, pentyle ou hexyle.

**3.** Procédé selon la revendication 1, dans lequel $R^2$ est un atome d'hydrogène, un groupe méthyle, éthyle, propyle, isopropyle, n-butyle, t-butyle, butyle secondaire, isobutyle, pentyle ou hexyle.

**4.** Procédé selon la revendication 1, dans lequel l'acide sulfonique est un composé ayant une structure représentée par la formule (II)

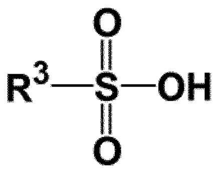

Formule (II)

où $R^3$ est un atome d'hydrogène, un groupe alkyle en $C_{1-6}$ ou un groupe fluoroalkyle en $C_{1-6}$.

**5.** Procédé selon la revendication 1, dans lequel l'acide sulfonique est l'acide méthanesulfonique, l'acide éthanesulfonique, l'acide propylsulfonique, l'acide trifluorométhanesulfonique, ou une combinaison de ceux-ci.

**6.** Procédé selon la revendication 1, dans lequel le phosphure contenant de l'oxygène est l'anhydride phosphorique, l'acide polyphosphorique ou une combinaison de ceux-ci.

**7.** Procédé selon la revendication 1, dans lequel le monomère ayant une structure représentée par la formule (I) est

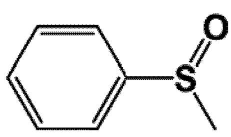
,
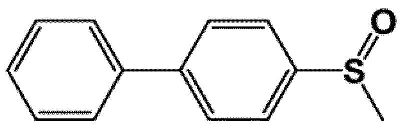
,

ou

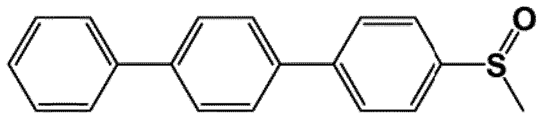
.

**8.** Procédé selon la revendication 1, dans lequel l'au moins un monomère ayant une structure représentée par la formule (I) est

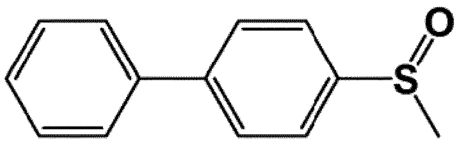

et

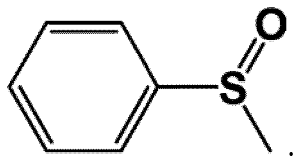
.

**9.** Procédé selon la revendication 4, dans lequel le polymère sel de sulfonium a au moins une unité de répétition ayant une structure représentée par la formule (III)

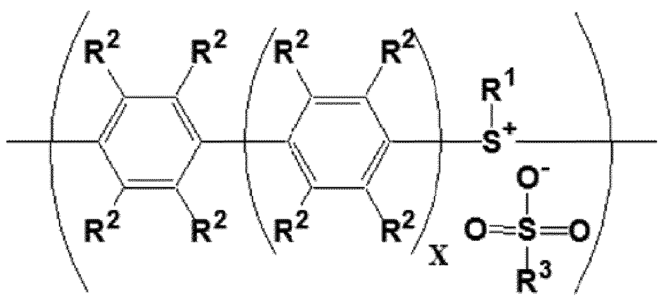
Formule (III)

où x est égal à 0, 1 ou 2 ; $R^1$ est un groupe alkyle en $C_{1-6}$; $R^2$ est indépendamment un atome d'hydrogène, ou un groupe alkyle en $C_{1-6}$; et $R^3$ est un atome d'hydrogène, un groupe alkyle en $C_{1-6}$ ou un groupe fluoroalkyle en $C_{1-6}$.

**10.** Procédé selon la revendication 9, dans lequel l'unité de répétition ayant une

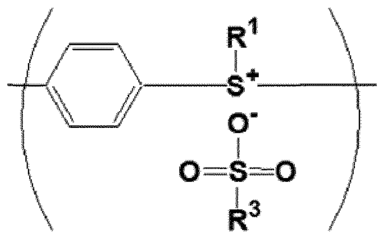

structure représentée par la formule (III) est

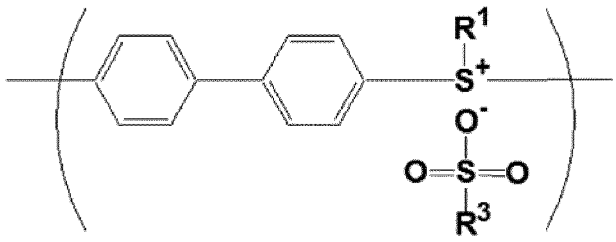

,

ou

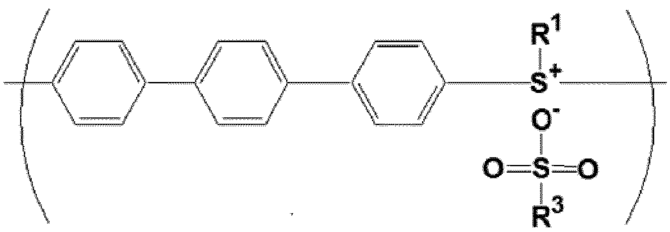

.

**11.** Procédé selon la revendication 1, comprenant en outre :

la réaction d'un nucléophile avec le polymère sel de sulfonium, pour obtenir un sulfure de polyarylène.

**12.** Procédé selon la revendication 11, dans lequel le nucléophile est la pyridine, la 4-méthylpyridine, la triéthylamine, le chlorure de potassium, le méthanol, l'éthanol, le diméthylformamide, le diméthylacétamide, la N-méthylpyrrolidone, ou une combinaison de ceux-ci.

**13.** Procédé selon la revendication 11, dans lequel le sulfure de polyarylène (PAS) a au moins une unité de répétition ayant une structure représentée par la formule (IV)

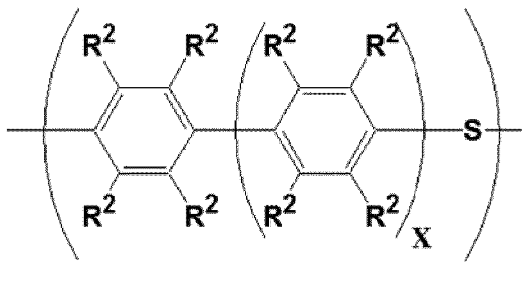

Formule (IV)

où x est égal à 0, 1 ou 2 ; et $R^2$ est indépendamment un atome d'hydrogène, ou un groupe alkyle en $C_{1-6}$.

**14.** Procédé selon la revendication 13, dans lequel l'unité de répétition ayant une

structure représentée par la formule (IV) est 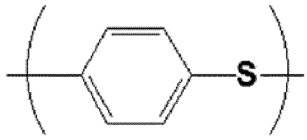 ,

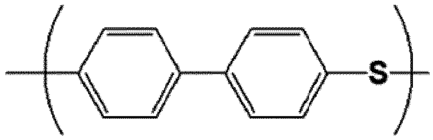 ,

ou

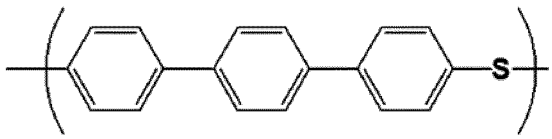 .